# EUROPEAN PATENT SPECIFICATION

(11) **EP 1 459 127 B1**
(45) Date of publication and mention of the grant of the patent: **31.01.2007**
(21) Application number: 02781540.6
(22) Date of filing: 14.11.2002
(51) Int. Cl.: G02F 1/1335, G02B 5/30, H05K 5/06, G02B 27/28

(54) **SEALED ENCLOSURE FOR A WIRE-GRID POLARIZER AND SUBASSEMBLY OF A DISPLAY DEVICE**
ABGEDICHTETES GEHÄUSE FÜR EINEN DRAHTGITTER-POLARISATOR UND EINE UNTEREINHEIT EINER ANZEIGEANORDNUNG
ENCEINTE HERMETIQUE POUR UN POLARISEUR A GRILLE METALLIQUE ET SOUS-ENSEMBLE POUR SYSTEME D'AFFICHAGE

(30) Priority: 21.12.2001 US 28118
(43) Date of publication of application: 22.09.2004
(73) Proprietor: Koninklijke Philips Electronics N.V., 5621 BA Eindhoven (NL)
(72) Inventor: KANE, Robert, H., NL-5656 AA Eindhoven (NL)
(74) Representative: Rolfes, Johannes Gerardus Albertus
(86) International application number: PCT/IB2002/004816
(87) International publication number: WO 2003/054619

(56) References cited:
- EP-A- 1 011 014
- WO-A-01/55783
- US-A- 5 621 551
- US-B1- 6 204 975
- US-B1- 6 307 607

## Description

### FIELD OF THE INVENTION

This invention relates to the protection of an environmentally-sensitive polarizer, and more particularly relates to a wire-grid polarizer for use in a display system employing a liquid crystal light modulator.

### BACKGROUND AND SUMMARY OF THE INVENTION

Display systems employing certain types of liquid crystal light modulators rely on a polarizing beam splitter (PBS) to direct input light of predominantly one polarization state to the light modulator panel. In particular, the type of light modulator (or light valve) known as a liquid crystal on silicon (LCoS) reflective device requires the illuminating beam to be linearly polarized.

The light modulator panel is composed of an array of individual picture elements or pixels defined by a reflective layer, a liquid crystal layer atop the reflective layer, and a row-and-column matrix of control electrodes. In one type of such a reflective liquid crystal light modulator panel, known as a liquid crystal on silicon (LCoS) panel, the control electrode circuitry is integrated into a silicon substrate below the reflective layer.

The polarization of the light incident on the array is altered on a pixel-by-pixel basis by the action of local electric fields on the birefringence of the liquid crystal in accordance with a display signal applied via the control electrodes. The light of altered polarization is then passed by the PBS to the projection optics.

In conventional systems the PBS is usually of the MacNeille prism type which is prone to stress-birefringence, due to stresses arising from differential thermal expansion of regions heated and unheated by the illuminating beam, exacerbated by the relatively large dimensions of the PBS which make temperature uniformity difficult to achieve and which lead to development of noticeable levels of optical retardance. Although the physical effect can be slight, on the order of nanometers or tens of nanometers, the optical consequences are clearly visible as alterations in the polarization state of the light, leading to non-uniformities in the output. The effect is especially noticeable in the dark state, showing up as lighter patches on a nominally black display screen.

The problem may be overcome by replacing much of the glass in the prism with a liquid, which does not exhibit stress-birefringence and allows temperature gradients to be homogenized by convection. A simpler solution is to use a wire-grid polarizing beam splitter of the type described in United States Patent 6,243,199 and United States Patent 6,288,840. Such a beam splitter has a parallel array of thin, elongated elements spaced on the order of wavelengths of visible light on a transparent substrate, which array interacts with waves of the incident light to transmit light of one polarization and reflect light of the other polarization. The device is to a first approximation an optical analog of polarizers for microwave radiation which are, in fact, arrays of wires spaced on the order of the microwave wavelengths.

When the wire grid is formed of finely-spaced aluminum lines on a glass substrate by photolithographic techniques, reflective liquid crystal display devices using the wire-grid polarizing beam splitter are capable of producing display images of higher contrast than systems using the conventional PBS of the MacNeille prism type, due at least in part to the freedom of the wire-grid polarizer from stress-birefringence.

Unfortunately, the aluminum wire-grid polarizer is unstable in normal ambient atmospheres over expected projector lifetimes, due to the susceptibility of the very thin-on the order of 200 nm-lines of pure aluminum to corrosion by contact with even trace amounts of reactive atmospheric components. Oxygen and water vapor are expected to be the principal sources of degradation, but other species in the environment are also likely to be a problem, particularly sulfur compounds relatively abundant in urban atmospheres. The wire grid must also be protected from handling, such as may occur in projector assembly, service, etc.

Due to the very delicate nature of the wire grid and the critical dependence of its structure on its optical properties, a satisfactory protective coating has not yet been developed. Thus, the excellent performance characteristics of this type of PBS are subject to significant degradation over time, preventing use of this type of PBS in a commercial display system.

In accordance with the invention, the wire-grid polarization beam splitter is sealed in an enclosure having a non-reactive atmosphere such as an inert gas, nitrogen or vacuum.

The enclosure may advantageously be a housing which also supports other optical components such as the light modulator panel and one or more lenses of a liquid crystal display system. Such a housing may have faces with mounting apertures into which the PBS and other optical components are sealed. This arrangement eliminates the need for separate mounts for the polarizer, the panel and the lenses, and is advantageously used as a last-stage sub-assembly for a liquid crystal display system for data display, cinema, or television.

According to one aspect of the invention, a light polarizing device according to claim 1 is provided.

Advantageously, there is provided a sealable housing for use in a sub-assembly for a display device, the sealable housing comprising a plurality of mounting apertures for optical elements.

Advantageously, the sealable housing is a wedge-shaped enclosure having three face portions extending between triangular top and bottom portions, each face having a mounting aperture for an optical element or device.

According to yet another embodiment of the invention, an environmentally sensitive polarizing device, a light modulator panel and a lens are sealed into the sealable housing to form a sub-assembly for a display device.

### BRIEF DESCRIPTION OF THE DRAWING

Figs. 1A and 1B are diagrammatic cross-sectional views of an environmentally-sensitive polarizing device of the Prior Art and one embodiment of an enclosed polarizing device of the invention, respectively;
Fig. 2 is a diagrammatic cross-sectional view of another embodiment of an enclosed polarizing device of the invention;
Fig. 3 is a perspective view of one embodiment of a sealable enclosure suitable for use in a light modulator sub-assembly for a display device; and
Fig. 4 is a section view of a light modulator sub-assembly using the enclosure of Fig. 3.

### DETAILED DESCRIPTION OF THE INVENTION

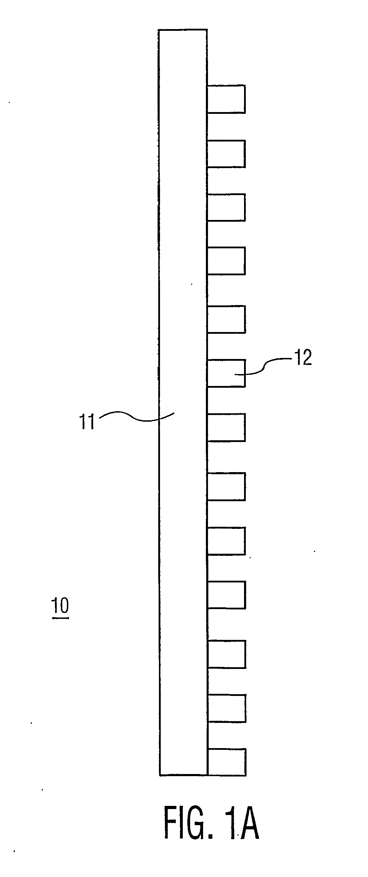

Fig. 1A shows diagrammatically in cross-section a wire-grid polarizer 10 of the prior art, such as the type described in United States Patent 6,243,199, having an optically transparent substrate 11, for example, glass, supporting wire grid 12, composed of parallel lines of aluminum, typically having a thickness of about 200 nm and spacing of about 200 nm. Because the fine structure of this wire grid, reaction of the aluminum with the ambient can damage the grid structure, resulting in degradation of the operating characteristics of the polarizer.

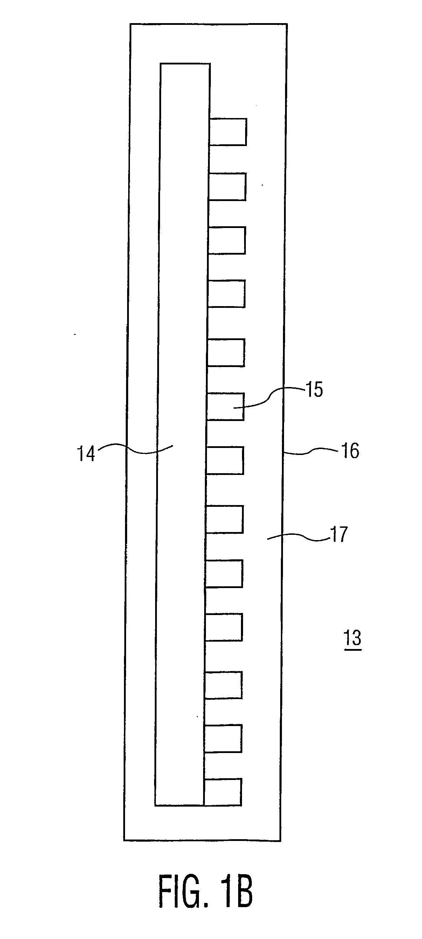

Fig. 1B shows diagrammatically in cross-section one embodiment of an enclosed wire-grid polarizer 13 of the invention, having a transparent optical substrate 14 and a wire grid 15 on the substrate 14, surrounded by an enclosure 16. The enclosure is formed of a transparent material, such as glass, and is provided with a non-reactive atmosphere, such as a vacuum or an inert gas.

Aluminum is a preferred wire-grid material. It has high reflectivity and is compatible with standard semiconductor processing practices by which such devices are presently made. An alternative material to aluminum is silver, which also has high conductivity and reflectivity. Like aluminum, silver is environmentally sensitive, primarily to sulfur compounds present in the ambient, and requires the atmospheric protection offered by the invention.

Since only the wire grid need be protected from the environment, a satisfactory enclosure may also be provided by placing a transparent cover sheet on spacers located on the periphery of the substrate to separate the cover sheet slightly from the wire grid, sealing the cover sheet to the glass substrate, and evacuating the intervening space or filling it with an inert gas. This embodiment may be used advantageously in display devices using transmissive light modulators.

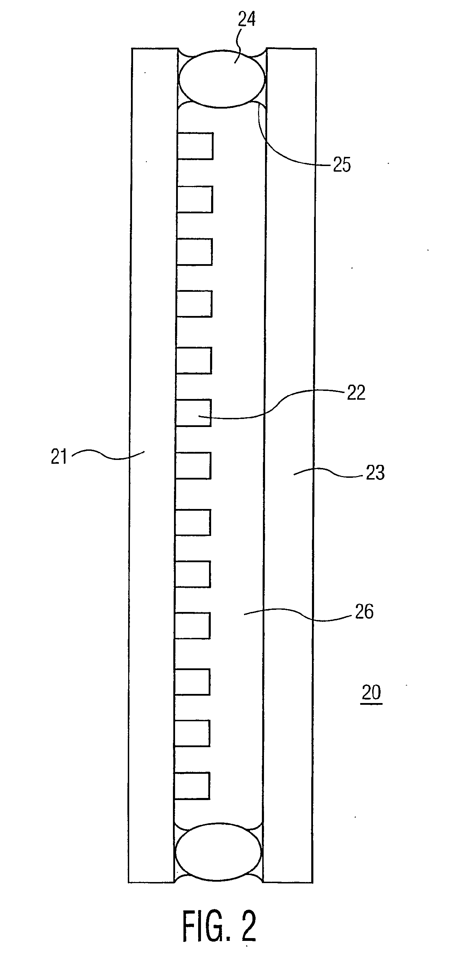

Such a structure is shown in Fig. 2, in which enclosed wire-grid polarizer 20 includes glass substrate 21, wire grid 22, glass cover sheet 23 resting on spacers 24 and sealed to substrate 21 with sealant 25. Sealant 25 may be of any sealant material sufficiently impermeable to the ambient and to the interior atmosphere 26, for example, room-temperature-vulcanizing silicone rubber or acrylic adhesives curable by UV light as typically used in optical assemblies.

Perfect hermeticity is not required, just sufficient isolation to prevent degradation of the wire-grid element over the expected lifetime of the optical system.

In an optical device or system employing the wire-grid polarizer as one of several optical elements or devices, it may be advantageous to incorporate two or more of these elements or devices into an integral sealable housing. The sealable housing provides an enclosure for the protective environment required by the wire-grid polarizer, and also eliminates the need to mount the various elements or devices individually.

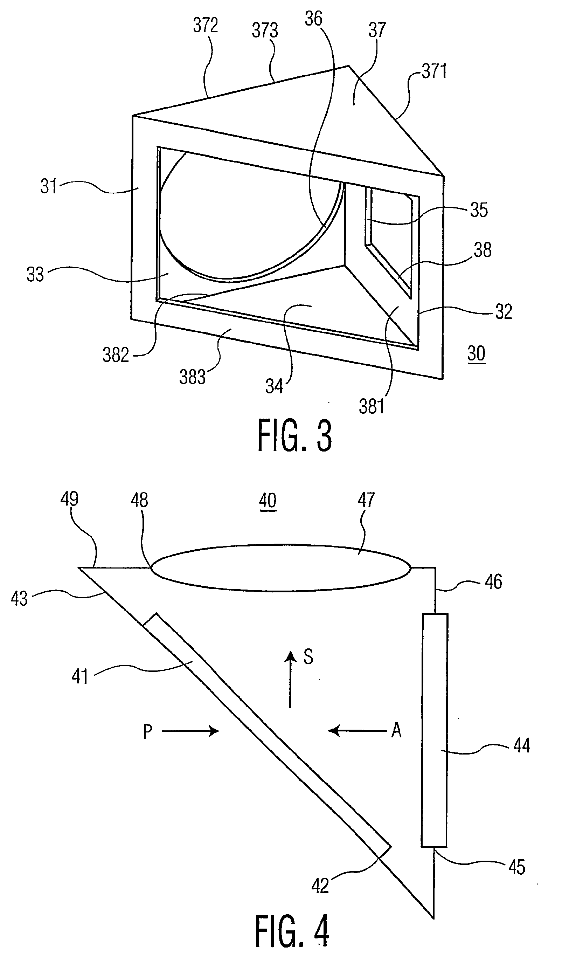

One embodiment of such an integral sealable housing 30 suitable for use as a last-stage sub-assembly for a liquid crystal projection display system is shown in perspective in Fig. 3.

The wedge-shaped housing has three rectangular faces 31, 32 and 33, each having a mounting aperture 34, 35, 36. The three faces extend between top and bottom portions 37 and 38, each having the shape of a right-triangle with two short sides (371, 372) and (381, 382) and one long side (373, 383) respectively. Face 31 extends between sides 373 and 383, corresponding to the hypotenuses of the wedge-shaped enclosure 30, and has aperture 34, sized to fit a wire-grid polarizer with the active surface facing inward. Face 32 extends between sides 371 and 381, and has an aperture 35 sized to fit a reflective liquid crystal light modulator panel, also with the active surface facing inward. Face 33 extends between short sides 372 and 382, and has an aperture 36 sized to fit a projection lens.

Such an integral housing with elements and devices in place to form a light modulator sub-assembly 40 for a reflective liquid crystal projection display system is shown in section view in Fig. 4. Wire-grid polarizer 41 is sealed into aperture 42 of side 43; a liquid crystal on silicon (LCoS) light modulator panel 44 is sealed into aperture 45 of side 46; and projection lens 47 is sealed into aperture 48 of side 49. The interior of the sealed housing has a non-reactive atmosphere, e.g., nitrogen or an inert gas, or a vacuum.

In one possible mode of operation, P polarized light, represented by arrow P, enters through polarizer 41 and is incident on light modulator panel 44. The polarization of the incident light is altered on a pixel-by-pixel basis by the liquid crystal layer above the reflective pixel array in accordance with a display signal applied to the reflective array. The light modulator panel 44 includes a quarter wave retarder to convert incoming linearly polarized light into circularly polarized light and back into partially linearly polarized light after reflection from the light modulator and modification by the liquid crystal layer in the display device before being passed to the projection lens 47.

The altered light, represented by arrow A, is reflected by the panel 44 back to the polarizer 41, where only light of one linear polarization state, represented by arrow S, is reflected to the projection lens 47.

The enclosure may include some means of pressure relief such as a flexible diaphragm should operating temperatures be so high that gas expansion is of concern, although for most systems this will be unlikely. The enclosure material should be dimensionally stable to retain the required optical tolerances, and could be an injection molded glass-filled polymer of the type used in many commercial projection systems. The optical elements may be sealed with conventional adhesives normally used for optical assembly.

The light modulator sub-assembly of Fig. 4 using the housing of Fig. 3 operates in the transmission-reflection ('T-R') mode, wherein the beam from a light engine is transmitted by the polarization device to the panel, and the light modulated by the panel is reflected from the polarization device to a display screen via the projection lens. The sub-assembly of Fig. 4 may also operate in the reflection-transmission ('R-T') mode, wherein the incoming beam from a light engine enters through the lens, which in this mode the last element of a light engine. The beam is then reflected by the polarization device to the panel, and the modulated light from the panel is transmitted by the polarization device to a projection lens outside the sub-assembly.

Although unnecessary to an understanding of the present invention, a description of a reflective liquid crystal display device may be found in United States Patent 6,307,607, issued to Jepsen et al. on October 23, 2001; a liquid crystal display system employing scrolling color beams on a single panel to produce a full color display is described in United States Patent 5,999,321, issued to Bradley on December 7, 1999. The specification of both patents is incorporated herein by reference.

In addition to their use in projectors incorporating reflective light modulators, such protected wire-grid polarizer elements can be advantageously used in projectors incorporating transmissive liquid crystal light valves. The enclosure embodiment shown in Figure 2 may advantageously be used as a pre-polarizer with or without a polarization conversion system such as presently employed in many commercial projection systems.

The invention has necessarily been described in terms of a limited number of embodiments. From this description, other embodiments and variations of embodiments will become apparent to those skilled in the art, and are intended to be fully encompassed within the scope of the invention and the appended claims.

## Claims

1. A light polarizing device (13, 20) comprising:
an optically transparent substrate (14, 21), an environmentally sensitive polarizing element (15, 22) on the substrate having a sealed enclosure (16, 24, 25) surrounding the polarizing element (15, 22), the enclosure having a non-reactive atmosphere (17) to protect the polarizing element (15, 22) from the ambient environment, wherein the polarizing element (15) is a wire-grid polarizing element, **characterized in that** the sealed enclosure comprises a sealable housing (30) for use in a sub-assembly for a display device, the sealable housing (30) comprising mounting apertures (34, 35, 36) for optical elements.

2. A light polarizing device (20) of claim 1 further comprising:
an optically transparent cover sheet (23), the enclosure comprising a plurality of spacers (24) distributed around the periphery of the device (20) and supporting the cover sheet (23) on the substrate (21) above the element (22) and a sealant (25) extending around the periphery of the device (20) between the substrate (21) and the cover sheet (23), wherein a non-reactive atmosphere 26 filling the interior space between the substrate (21) and the cover sheet (23) is provided to protect the environmentally sensitive polarizing element (22).

3. The light polarizing device of claim 1, wherein the sealable housing (30) is comprised of triangular top and bottom portions (37, 38) and three face portions (31, 32, 33) extending between the top and bottom portions (37, 38) to form a wedge-shaped enclosure (30), one of the mounting apertures (34), (35, 36) for optical elements located in each of the face portions (31, 32, 33).

4. The light polarizing device of claim 1, wherein the sealable housing (30) in which the top and bottom portions (37, 38) are right triangles each having two short sides (371, 372) and (381, 382) and a long side (373, 383), respectively.

5. The light polarizing device of claim 1, wherein the sealed enclosure comprises a sealable housing (40) having first, second and third mounting apertures (42, 45, 48), a light polarizing element (41) having an environmentally sensitive active surface, the light polarizing element (41) sealed into the first aperture (42), a light modulator panel (44) sealed into the second aperture (45) and a lens (47) sealed into the third aperture (48).

6. The light polarizing device of claim 5 in which the sealable housing (40) comprises triangular top and bottom portions (37, 38) and first, second and third rectangular face portions (31, 32, 33) extending between the top and bottom portions (37, 38) to form a wedge-shaped enclosure (30), the first, second and third mounting apertures (42, 45, 48) being located in the first, second and third rectangular face portions (31, 32, 33), respectively.

7. The light polarizing device of claim 6 in which the top and bottom portions (37, 38) are right-triangles having two short sides (371, 372)(381, 382) and a long side (373, 383), and the first face portion (31) extends between the long sides (373, 383) of the top and bottom portions (37, 38).

8. The light polarizing device of claim 7 in which the polarizing element (41) is a wire-grid polarizer.

9. The light polarizing device of claim 5 in which the light modulator panel (44) is a liquid crystal light modulator panel.

10. The light polarizing device of claim 5 in which the lens (47) is a projection lens.

## Patentansprüche

1. Lichtpolarisationseinrichtung (13, 20), die Folgendes umfasst:
ein optisch transparentes Substrat (14, 21), ein gegenüber Umgebungseinflüssen empfindliches Polarisationselement (15, 22) auf dem Substrat mit einer abgedichteten Einfassung (16, 24, 25), die das Polarisationselement (15, 22) umgibt, wobei die Einfassung eine nicht reaktive Atmosphäre (17) zum Schutz des Polarisationselements (15, 22) vor der äußeren Umgebung aufweist, wobei das Polarisationselement (15) ein Drahtgitter-Polarisationselement ist, **dadurch gekennzeichnet, dass** die abgedichtete Einfassung ein abdichtbares Gehäuse (30) umfasst zur Verwendung in einer Unterbaugruppe für eine Anzeigeeinrichtung, wobei das abdichtbare Gehäuse (30) Einbauöffnungen (34, 35, 36) für optische Elemente umfasst.

2. Lichtpolarisationseinrichtung (20) nach Anspruch 1, die des Weiteren Folgendes umfasst:
eine optisch transparente Abdeckung (23), wobei die Einfassung mehrere über den Rand der Einrichtung (20) verteilte Abstandhalter (24) umfasst, die die Abdeckung (23) auf dem Substrat (21) über dem Element (22) tragen, und eine Abdichtung (25), die sich über den Rand der Einrichtung (20) zwischen dem Substrat (21) und der Abdeckung (23) erstreckt, wobei eine nicht reaktive Atmosphäre (26), die den inneren Bereich zwischen dem Substrat (21) und der Abdeckung (23) füllt, zum Schutz des gegenüber Umgebungseinflüssen empfindlichen Polarisationselements (22) bereitgestellt wird.

3. Lichtpolarisationseinrichtung nach Anspruch 1, bei der das abdichtbare Gehäuse (30) dreieckige obere und untere Bereiche (37, 38) und drei Flächenbereiche (31, 32, 33) umfasst, die sich zwischen den oberen und unteren Bereichen (37, 38) erstrecken und somit eine keilförmige Einfassung (30) bilden, wobei sich in jedem der Flächenbereiche (31, 32, 33) jeweils eine der Einbauöffnungen (34), (35, 36) für optische Elemente befindet.

4. Lichtpolarisationseinrichtung nach Anspruch 1, wobei das abdichtbare Gehäuse (30), in dem die oberen und unteren Bereiche (37, 38) rechtwinklige Dreiecke bilden, die jeweils zwei kurze Seiten (371, 372) und (381, 382) bzw. eine lange Seite (373, 383) haben.

5. Lichtpolarisationseinrichtung nach Anspruch 1, bei der die abgedichtete Einfassung ein abdichtbares Gehäuse (40) umfasst mit ersten, zweiten und dritten Einbauöffnungen (42, 45, 48) und einem Lichtpolarisationselement (41) mit einer gegenüber Umgebungseinflüssen empfindlichen aktiven Oberfläche, wobei das Lichtpolarisationselement (41) in der ersten Öffnung (42) abgedichtet eingefasst ist, eine Lichtmodulatorplatte (44) in der zweiten Öffnung (45) abgedichtet eingefasst ist und eine Linse (47) in der dritten Öffnung (48) abgedichtet eingefasst ist.

6. Lichtpolarisationseinrichtung nach Anspruch 5, bei der das abdichtbare Gehäuse (40) dreieckige obere und untere Bereiche (37, 38) sowie erste, zweite und dritte rechteckige Flächenbereiche (31, 32, 33) umfasst, die sich zwischen den oberen und unteren Bereichen (37, 38) erstrecken und somit eine keilförmige Einfassung (30) bilden, wobei sich die erste, zweite und dritte Einbauöffnung (42, 45, 48) jeweils im ersten, zweiten bzw. dritten rechteckigen Flächenbereich (31, 32, 33) befinden.

7. Lichtpolarisationseinrichtung nach Anspruch 6, bei der die oberen und unteren Bereiche (37, 38) rechtwinklige Dreiecke darstellen mit zwei kurzen Seiten (371, 372) (381, 382) sowie einer langen Seite (373, 383) und bei der sich der erste Flächenbereich (31) zwischen den langen Seiten (373, 383) des oberen und unteren Bereichs (37, 38) erstreckt.

8. Lichtpolarisationseinrichtung nach Anspruch 7, bei der das Polarisationselement (41) ein Drahtgitterpolarisator ist.

9. Lichtpolarisationseinrichtung nach Anspruch 5, bei der die Lichtmodulatorplatte (44) eine Flüssigkristall-Lichtmodulatorplatte ist.

10. Lichtpolarisationseinrichtung nach Anspruch 5, bei der die Linse (47) eine Projektionslinse ist.

## Revendications

1. Dispositif de polarisation de lumière (13, 20) comprenant:
un substrat optiquement transparent (14, 21), un élément de polarisation sensible à l'environnement (15, 22) sur le substrat ayant une enceinte hermétique (16, 24, 25) qui entoure l'élément de polarisation (15, 22), l'enceinte ayant une atmosphère non réactive (17) pour protéger l'élément de polarisation (15, 22) contre l'environnement ambiant où l'élément de polarisation (15) est un élément de polarisation à grille métallique, **caractérisé en ce que** l'enceinte hermétique comprend un boîtier scellable (30) pour être utilisé dans un sous-ensemble pour un dispositif d'affichage, le boîtier scellable (30) comprenant des ouvertures de montage (34, 35, 36) pour des éléments optiques.

2. Dispositif de polarisation de lumière (20) selon la revendication 1, comprenant encore:
une feuille de couverture optiquement transparente (23), l'enceinte comprenant une pluralité d'espaceurs (24) qui sont répartis autour de la périphérie du dispositif (20) et qui supportent la feuille de couverture (23) sur le substrat (21) au-dessus de l'élément (22) et un scellement (25) s'étendant autour de la périphérie du dispositif (20) entre le substrat (21) et la feuille de couverture (23) où une atmosphère non réactive (26) remplissant l'espace intérieur entre le substrat (21) et la feuille de couverture (23) est prévue pour protéger l'élément de polarisation sensible à l'environnement (22).

3. Dispositif de polarisation de lumière selon la revendication 1, dans lequel le boîtier scellable (30) se compose de portions supérieure et inférieure triangulaires (37, 38) et de trois portions de face (31, 32, 33) s'étendant entre les portions supérieure et inférieure (37, 38) pour constituer une enceinte cunéiforme (30), une des ouvertures de montage (34, 35, 36) pour des éléments optiques étant située dans chacune des portions de face (31, 32, 33).

4. Dispositif de polarisation de lumière selon la revendication 1, dans lequel se situe le boîtier scellable (30) dans lequel les portions supérieure et inférieure (37, 38) sont des triangles rectangulaires ayant chacun deux côtés courts (371, 372) et (381, 382) et un côté long (373, 383), respectivement.

5. Dispositif de polarisation de lumière selon la revendication 1, dans lequel l'enceinte hermétique comprend un boîtier scellable (40) ayant des première, deuxième et troisième ouvertures de montage (42, 45, 48), un élément de polarisation de lumière (41) ayant une surface active sensible à l'environnement, l'élément de polarisation de lumière (41) étant scellé dans la première ouverture (42), un panneau de modulateur de lumière (44) étant scellé dans la deuxième ouverture (45) et une lentille (47) étant scellée dans la troisième ouverture (48).

6. Dispositif de polarisation de lumière selon la revendication 5, dans lequel le boîtier scellable (40) comprend des portions supérieure et inférieure triangulaires (37, 38) et des première, deuxième et troisième portions de face rectangulaires (31, 32, 33) s'étendant entre les portions supérieure et inférieure (37, 38) pour constituer une enceinte cunéiforme (30), les première, deuxième et troisième ouvertures de montage (42, 45,48) étant situées dans les première, deuxième et troisième portions de face rectangulaires (31, 32, 33), respectivement.

7. Dispositif de polarisation de lumière selon la revendication 6, dans lequel les portions supérieure et inférieure (37, 38) sont des triangles rectangulaires ayant chacun deux côtés courts (371, 372) et (381, 382) et un côté long (373, 383) et la première portion de face (31) s'étend entre les côtés longs (373, 383) des portions supérieure et inférieure (37,38)

8. Dispositif de polarisation de lumière selon la revendication 7, dans lequel l'élément de polarisation (41) est un polariseur à grille métallique.

9. Dispositif de polarisation de lumière selon la revendication 5, dans lequel le panneau de modulateur de lumière (44) est un panneau de modulateur de lumière à cristaux liquides.

10. Dispositif de polarisation de lumière selon la revendication 5, dans lequel la lentille (47) est une lentille de projection.
